# EUROPÄISCHE PATENTSCHRIFT

(11) **EP 1 273 535 B1**
(45) Veröffentlichungstag und Bekanntmachung des Hinweises auf die Patenterteilung: **23.08.2006**
(21) Anmeldenummer: 02012686.8
(22) Anmeldetag: 07.06.2002
(51) Int. Cl.: B65G 17/42, B65G 49/04

(54) **Fördersystem**
Conveying system
Système de transport

(30) Priorität: 04.07.2001 DE 10132351
(43) Veröffentlichungstag der Anmeldung: 08.01.2003
(60) Teilanmeldung: 05014816.2
(73) Patentinhaber: EISENMANN Maschinenbau GmbH & Co. KG, 71032 Böblingen (DE)
(72) Erfinder: Ehrenleitner, Franz, 70439 Stuttgart (DE)
(74) Vertreter: Ostertag, Reinhard

(56) Entgegenhaltungen:
- DE-U- 9 408 846
- FR-A- 2 589 135
- US-A- 3 132 373

## Beschreibung

Die Erfindung betrifft ein Fördersystem zum Transport von Karosserien mit
a) mindestens einer Tragschiene, die sich in unterschiedlicher Höhe über dem Boden erstreckt;
b) mindestens einem eine Karosserie aufnehmenden Wagen, der an der Tragschiene mittels Rollen abläuft;
c) mindestens einer Antriebsschiene, die oberhalb der Tragschiene verläuft und ein sich bewegendes Antriebsmittel führt;
d) mindestens einer Verbindungseinrichtung, welche eine Antriebsverbindung zwischen dem Antriebsmittel und dem Wagen herstellt,
   wobei
e) die Antriebsschiene mit dem Antriebsmittel in konstan-Höhe über dem Boden verläuft;
f) die Verbindungseinrichtung so ausgestaltet ist, daß sie die lokalen Variationen des vertikalen Abstands zwischen dem Antriebsmittel und der Tragschiene auszugleichen vermag.

Beim Transport von Karosserien mittels eines Fördersystems ist häufig ein Wechsel der Förderhöhe erforderlich. So müssen beispielsweise Fahrzeugkarosserien bei ihrer Lackierung in kontinuierlichem Durchlauf in ein Behandlungsbad eingetaucht und aus diesem wieder ausgehoben werden. Dieses Ein- und Austauchen geschieht über sog. "Schrägstrecken", in denen die Tragschiene unter einem entsprechenden Winkel gegenüber der Horizontalen verläuft.

Bei bekannten Zweischienen-Fördersystemen ähnlich denen der eingangs genannten Art verlief die Antriebsschiene sowohl in der Draufsicht als auch in der Höhe parallel zu dem darunter angeordneten Tragschienensystem, so daß also der vertikale Abstand zwischen Antriebsschiene und Antriebsmittel einerseits und der Tragschiene andererseits konstant blieb. Dies hatte eine aufwendige und teure Verlegung der Antriebsschiene und der hierin geführten Antriebsmittel zur Folge.

Aus der FR 2 589 135 ist ein Fördersystem für Fahrzeugkarosserien der eingangs genannten Art bekannt geworden. Dort verläuft eine Antriebsschiene in konstanter Höhe, während eine Tragschiene sich darunter in unterschiedlicher Höhe über dem Boden erstreckt. Auf der Tragschiene läuft ein Hängewagen, an dessen senkrechten Trägern die Tragstruktur für die Karosserie höhenverschieblich angeordnet ist. Der Wagen ist also zweigeteilt ausgebildet. Diese Lösung ist recht aufwendig.

Aufgabe der vorliegenden Erfindung ist es, ein Fördersystem der eingangs genannten Art so auszubilden, daß ihr mechanischer Aufbau insgesamt preiswerter wird.

Diese Aufgabe wird erfindungsgemäß dadurch gelöst, daß
g) die Verbindungseinrichtung eine Stange ist, die am oberen Ende gelenkig mit dem Antriebsmittel und am unteren Ende gelenkig mit dem Wagen verbunden ist.

Erfindungsgemäß wird, da der vertikale Abstand zwischen dem Antriebsmittel und dem Tragschienensystem bzw. den auf diesem laufenden Wagen nicht konstant ist sondern lokal variiert, eine Stange als Verbindungseinrichtung zwischen dem Antriebsmittel und dem Wagen eingesetzt, die aufgrund ihrer gelenkigen Verbindung mit dem Antriebsmittel und dem Wagen in der Lage ist, diese lokalen Höhendifferenzen auszugleichen. Insgesamt ergibt sich so ein sehr preiswertes, dabei aber störunanfällig arbeitendes Fördersystem.

Bei dem Antriebsmittel kann es sich um eine Vielzahl aneinander anstoßender Schubstangen handeln. Die Verwendung von Schubstangen, die jeweils in sich starr sind, wird durch die vorliegende Erfindung besonders erleichtert, da ja Krümmungen des Antriebsmittels in vertikaler Richtung nicht auftreten.

Alternativ ist es möglich, daß das Antriebsmittel eine Kette ist. Auch deren Führung wird erleichtert, wenn sie nur in der horizontalen Ebene und nicht auch zusätzlich in der vertikalen Ebene Bögen durchlaufen muß.

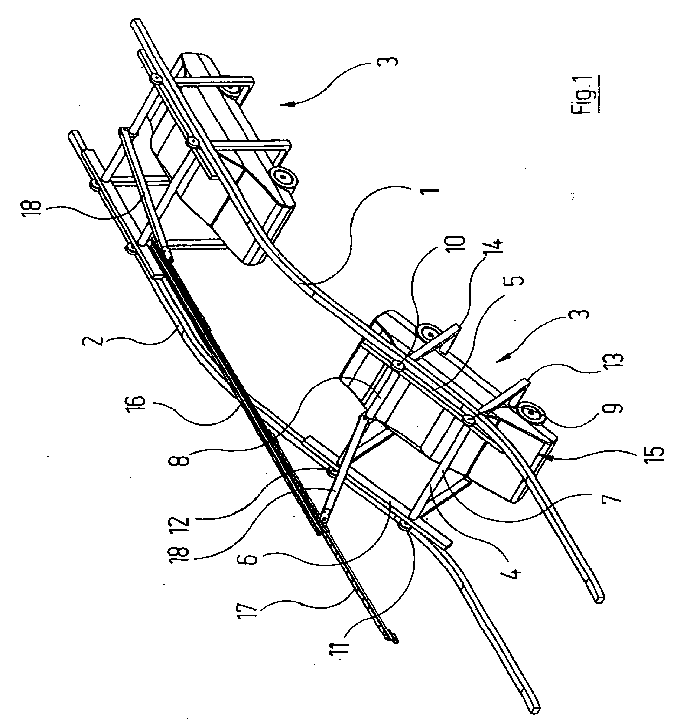

Ein Ausführungsbeispiel der Erfindung wird nachfolgend anhand der Zeichnung näher erläutert; es zeigen
- Figur 1: perspektivisch einen Ausschnitt aus einer Förderanlage für Kraftfahrzeuge;

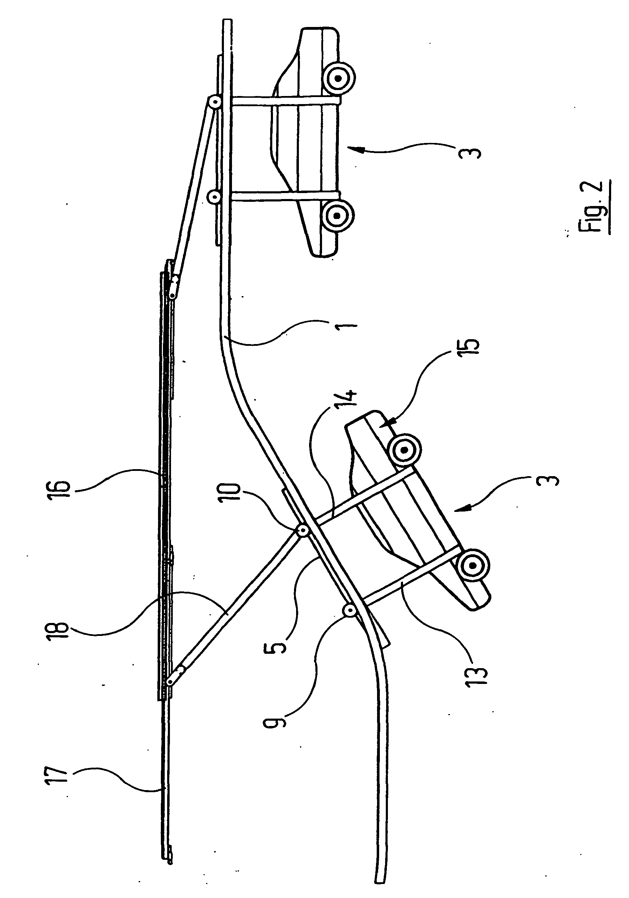

- Figur 2: die Seitenansicht zu Figur 1.

Die in der Zeichnung dargestellte Förderanlage dient dem Transport von Kraftfahrzeugen.

Sie umfaßt ein Tragschienensystem, das aus zwei parallel zueinander verlaufenden Tragschienen 1, 2 besteht. In dem dargestellten Ausschnitt des Tragschienensystems 1, 2 überwindet dieses einen Höhenunterschied zwischen einem höheren Niveau über dem Boden, das sich rechts in den Figuren befindet, und einem niedrigeren Niveau, das sich links in den Figuren anschließt; die beiden Niveaus sind über einen geneigt zur Horizontalen verlaufenden Abschnitt ("Schrägbereich") der Tragschienen 1, 2 miteinander verbunden.

Auf den Tragschienen 1, 2 läuft eine Mehrzahl von Wagen 3. Jeder Wagen 3 besitzt einen oberen Rahmen 4, der sich seinerseits aus Längstraversen 5, 6 und Quertraversen 7, 8 zusammensetzt. An jeder Längstraverse 5, 6 sind jeweils zwei Rollen 9, 10 bzw. 11, 12 drehbar gelagert, die auf der Oberseite der jeweils zugeordneten Tragschiene 1 bzw. 2 abrollen.

Zu jedem Wagen 3 gehören ferner zwei U-förmige Tragbügel 13, 14, die starr mit dem oberen Rahmen 4 verbunden sind; sie können untereinander über eine Längstraverse verbunden sein, müssen dies aber nicht, wie dies beim dargestellten Ausführungsbeispiel der Fall ist. Die Tragbügel 13, 14 tragen das zu transportierende Kraftfahrzeug, das insgesamt mit dem Bezugszeichen 15 gekennzeichnet ist.

Oberhalb des Tragschienensystems 1, 2 erstreckt sich, in der Draufsicht etwa in der Mitte zwischen den beiden Tragschienen 1, 2 eine Antriebsschiene 16, durch welche sich ein Antriebsmittel 17 hindurch erstreckt. Bei dem Antriebsmittel 17 kann es sich um eine Förderkette oder, wie im dargestellten Ausführungsbeispiel, eine Folge aneinanderstoßender Schubstangen handeln. In der Zeichnung ist der linke Bereich der Antriebsschiene 16 weggebrochen, so daß das hierin verlaufende Antriebsmittel 17 erkennbar ist.

Im Gegensatz zum Tragschienensystem 1, 2 verläuft die Antriebsschiene 16 in einer konstanten Höhe über dem Boden im wesentlichen horizontal; sie vollzieht also den Höhenwechsel, den das Tragschienensystem 1, 2 erfährt, nicht mit.

Jeder Wagen 3 ist mit dem in der Antriebsschiene 16 sich bewegenden Antriebsmittels 17 über eine Zugstange 18 verbunden. Das obere Ende der Zugstange 18 ist mit dem Antriebsmittel 17 und das untere Ende der Zugstange 18 mit der hinteren Quertraverse 8 des jeweiligen Wagens 3 gelenkig verbunden.

Das beschriebene Fördersystem arbeitet wie folgt:

Die sich auf dem Tragschienensystem 1, 2 bewegenden Wagen 3 werden durch das in der Antriebsschiene 16 laufende Antriebsmittel 17 über die Zugstange 18 vorwärts gezogen. Ihr Gewicht wird dabei von dem Tragschienensystem 1, 2 aufgenommen. In demjenigen Bereich des Tragschienensystems 1, 2, welches sich auf einem höheren Niveau befindet, steht die Zugstange 18 dabei flacher zur Horizontalen als im tieferen Bereich, wie den Zeichnungen gut zu entnehmen ist.

## Patentansprüche

1. Fördersystem zum Transport von Karosserien mit
a) mindestens einer Tragschiene (1, 2), die sich in unterschiedlichen Höhen über dem Boden erstreckt;
b) mindestens einem eine Karosserie aufnehmenden Wagen, (3), der an der Tragschiene (1, 2) mittels Rollen (9, 10, 11, 12) abläuft;
c) mindestens einer Antriebsschiene (16), die oberhalb der Tragschiene (1, 2) verläuft und ein sich bewegendes Antriebsmittel (17) führt;
d) mindestens einer Verbindungseinrichtung (18), welche eine Antriebsverbindung zwischen dem Antriebsmittel (17) und dem Wagen (3) herstellt,
wobei
e) die Antriebsschiene (16) mit dem Antriebsmittel (17) in konstanter Höhe über dem Boden verläuft;
f) die Verbindungseinrichtung (18) so ausgestaltet ist, daß sie die lokalen Variationen des vertikalen Abstands zwischen dem Antriebsmittel (17) und der Tragschiene (1, 2) auszugleichen vermag,
**dadurch gekennzeichnet, daß**
g) die Verbindungseinrichtung (18) eine Stange ist, die am oberen Ende gelenkig mit dem Antriebsmittel (17) und unteren Ende gelenkig mit dem Wagen (3) verbunden ist.

2. Fördersystem nach Anspruch 1, **dadurch gekennzeichnet,**
**daß** das Antriebsmittel aus einer Vielzahl aneinander anstoßender Schubstangen (17) besteht.

3. Fördersystem nach Anspruch 1, **dadurch gekennzeichnet, daß** das Antriebsmittel eine Kette ist.

## Claims

1. Conveyor system for transporting car bodies with,
a) at least one support rail (1, 2) which extends at different heights above the ground;
b) at least one carriage (3) which holds a car body and runs on the support rail (1, 2) by means of rollers (9, 10, 11, 12);
c) at least one drive rail (16) which extends above the support rail (1, 2) and guides a moving drive means (17);
d) at least one connecting device (18) which establishes a drive connection between the drive means (17) and the carriage (3);
wherein
e) the drive rail (16) with the drive means (17) extends at a constant height above the ground;
f) the connecting device (18) is formed such that it can compensate for the local variations in the vertical spacing between the drive means (17) and the support rail (1, 2),
**characterised in that**,
g) the connecting device (18) is a rod which is flexibly connected at the upper end to the drive means (17) and at the lower end to the carriage (3).

2. Conveyor system according to Claim 1, **characterised in that** the drive means consists of a large number of abutting connecting rods (17).

3. Conveyor system according to Claim 1, **characterised in that** the drive means is a chain.

## Revendications

1. Système de transport pour le transport de carrosseries, avec
a) au moins un rail porteur (1, 2), qui s'étend à différentes hauteurs au-dessus du sol ;
b) au moins un chariot (3) recevant une carrosserie, chariot qui roule sur le rail porteur (1, 2) au moyen de galets (9, 10, 11, 12);
c) au moins un rail d'entraînement (16), qui s'étend au-dessus du rail porteur (1, 2) et guide un moyen d'entraînement (17) qui se déplace ;
d) au moins un équipement de liaison (18) qui réalise une liaison d'entraînement entre le moyen d'entraînement (17) et le chariot (3),
sachant que
e) le rail d'entraînement (16) muni du moyen d'entraînement (17) s'étend à hauteur constante au-dessus du sol ;
f) l'équipement de liaison (18) est conçu de telle sorte qu'il permet de compenser les variations locales de la distance verticale entre le moyen d'entraînement (17) et le rail porteur (1, 2),
**caractérisé en ce que**
g) l'équipement de liaison (18) est une barre qui est reliée à l'extrémité supérieure de manière articulée au moyen d'entraînement (17) et à l'extrémité inférieure de manière articulée au chariot (3).

2. Système de transport selon la revendication 1, **caractérisé en ce que** le moyen d'entraînement est constitué d'une pluralité de bielles (17) mises bout à bout.

3. Système de transport selon la revendication 1, **caractérisé en ce que** le moyen d'entraînement est une chaîne.
